# EUROPÄISCHE PATENTANMELDUNG

(11) **EP 2 168 464 A1**
(43) Veröffentlichungstag der Anmeldung: **31.03.2010**
(21) Anmeldenummer: 08405243.0
(22) Anmeldetag: 26.09.2008
(51) Int. Cl.: A47J 31/06

(54) **Brühvorrichtung für Kaffee und Verfahren zum Erzeugen eines Kaffeegetränkes mit einer Brühvorrichtung**

(71) Anmelder: Jura Elektroapparate AG, 4626 Niederbuchsiten (CH)
(72) Erfinder: Reyhanloo, Shahryar, 4573 Lohn-Ammansegg (CH)
(74) Vertreter: EGLI-EUROPEAN PATENT ATTORNEYS

(57) **Zusammenfassung**

Die Brühvorrichtung (10) für Kaffee umfasst eine Brüheinheit (11) zum Brühen von Kaffee, ein Cremaventil (21) und einen Kaffeeauslass (31), wobei die Brüheinheit (11), das Cremaventil (21) und der Kaffeeauslass (31) derart miteinander verbunden sind, dass in der Brüheinheit (11) gebrühter Kaffee durch das Cremaventil (21) zum Kaffeeauslass (31) führbar ist und das Cremaventil (21) derart ausgebildet ist, dass der gebrühte Kaffee in einer Cremakammer (21) des Cremaventils (21) durchwirbelbar ist, so dass eine Crema (42) erzeugt wird. Weiter umfasst die Brühvorrichtung (10) eine Injektionsvorrichtung (27) zum Injizieren eines Gases in die Cremakammer (20).

## Beschreibung

Die Erfindung bezieht sich auf eine Brühvorrichtung für Kaffee mit einem Cremaventil nach dem Oberbegriff des Anspruchs 1 und ein Verfahren zum Erzeugen eines Kaffeegetränks mit einer Brühvorrichtung nach dem Oberbegriff des Anspruchs 10.

Die Crema stellt heute einen wesentlichen Bestandteil eines Kaffeegetränkes dar. Sie bindet einen grossen Teil der Kaffeearomen und trägt so wesentlich zu einem guten Kaffeegeschmack bei. Die Bildung der Crema wird durch verschiedene Faktoren beeinflusst. So zum Beispiel durch die Qualität des gebrühten Kaffees und die Art des Brühvorgangs.

Aus der Patentanmeldung EP 1 743 554 A1 ist eine Brühvorrichtung für einen Kaffeevollautomaten bekannt, bei welcher ein Cremaventil mit einer Brüheinheit und einem Kaffeeauslass verbunden ist. Das Cremaventil regelt mit einem Verschlusspfropfen und einer Druckfeder den Ausfluss des in der Brüheinheit gebrühten Kaffees. Beim Durchpressen des gebrühten Kaffees unter hohem Druck durch eine Öffnung am Verschlusspfropfen wird der Kaffee durchgewirbelt und es entsteht ein sehr feinporiger Schaum, welcher die Crema bildet. Bei dieser Kaffeemaschine kann die Erzeugung der Crema durch den Benutzer der Kaffeemaschine praktisch nicht beeinflusst werden. Der jeweils erhaltene Kaffee oder das Kaffeegetränk sieht somit optisch jeweils ähnlich aus.

Bei einer anderen bekannten Brühvorrichtung für Kaffee ist eine mechanische Drosselvorrichtung installiert, mit welcher es möglich ist, durch eine mechanische Verstellung der Drossel-Vorrichtung an einem von der Brühkammer entfernten Ende des Kaffeeauslaufs den Fluss des ausfliessenden Kaffees zu drosseln. Diese Drosselung hat zwar einen Einfluss auf die Menge der erzeugten Crema, der Einfluss ist allerdings eher gering. Weiterhin hat die Drosselung einen Einfluss auf die Kaffeetemperatur und somit auf die Qualität des gebrühten Kaffees. Weiterhin besteht die Gefahr, dass die Drosselvorrichtung verstopft.

Heute existieren eine Vielzahl verschiedener gängiger Kaffeegetränke wie beispielsweise Cappuccino, Latte Macchiato, Espresso, Ristretto usw. Je nach Kultur, regionalen Gepflogenheiten oder persönlichem Geschmack eines Benutzers der Kaffeemaschine sind dabei an die Menge und an die Porengrösse der Crema unterschiedliche Anforderungen gestellt.

Der vorliegenden Erfindung liegt die Aufgabe zugrunde, die genannten Nachteile zu vermeiden und eine Brühvorrichtung für Kaffee und ein Verfahren zu schaffen, welche es ermöglichen, mit einfachen Mitteln die Menge der jeweils erzeugten Crema in einem grossen Bereich zu variieren und eine Vielzahl von Crema-Varianten mit einer Vielfalt von Eigenschaften zu erzeugen. Dabei sollen vorzugsweise Kaffeearomen gebunden werden und eine Crema erzeugt werden, welche an das jeweilige Kaffeegetränk, die kulturellen und/oder regionalen Gepflogenheiten und/oder den persönlichen Geschmack des Benutzers der Kaffeemaschine angepasst werden kann.

Diese Aufgabe wird gelöst durch eine Brühvorrichtung mit den Merkmalen des Patentanspruchs 1 und ein Verfahren mit den Merkmalen des Patentanspruchs 10.

Die Brühvorrichtung für Kaffee umfasst eine Brüheinheit zum Brühen von Kaffee, ein Cremaventil und einen Kaffeeauslass, wobei die Brüheinheit, das Cremaventil und der Kaffeeauslass derart miteinander verbunden sind, dass in der Brüheinheit gebrühter Kaffee durch das Cremaventil zum Kaffeeauslass führbar ist und das Cremaventil derart ausgebildet ist, dass der gebrühte Kaffee in einer Cremakammer des Cremaventils durchwirbelbar ist, so dass eine Crema erzeugt wird.

Erfindungsgemäss umfasst die Brühvorrichtung eine Injektionsvorrichtung zum Injizieren eines Gases in die Cremakammer.

Mithilfe der Injektionsvorrichtung kann ein Gas in die Cremakammer injiziert werden. Das injizierte Gas wird von dem aus der Brüheinheit ausfliessenden Kaffee umströmt. Die Verwirbelung des Kaffees mit dem injizierten Gas verstärkt die Bildung von feinporigem Schaum, der Crema, im Kaffee. Die Menge und die Art der erzeugten Crema, insbesondere die Porengrösse der Crema, werden bei der Injektion des Gases von mehreren Faktoren, wie beispielsweise der Menge und dem Druck des injizierten Gases, beeinflusst.

In einer Ausführungsform der Brühvorrichtung umfasst die Injektionsvorrichtung eine Schlauchpumpe, eine Kolbenpumpe, eine andere Pumpe oder eine Druckflasche und das injizierte Gas ist vorzugsweise Luft, CO2 oder ein Aromastoff. Mit einer Schlauchpumpe, einer Kolbenpumpe oder einer anderen Pumpe kann beispielsweise Umgebungsluft unter genügend hohen Druck gesetzt werden, sodass diese in die Cremakammer injiziert werden kann. Es ist auch möglich, das Gas in einer Druckflasche zu speichern. Dabei kann die Druckflasche mit Umgebungsluft oder beispielsweise mit Kohlendioxid CO2 befüllt werden. Es ist auch denkbar, die Druckflasche mit einem Aromastoff zu befüllen und diese beim Injizieren in die Cremakammer mit Umgebungsluft zu vermischen.

Eine weitere Ausführungsform der Brühvorrichtung umfasst eine Dosiervorrichtung zum Dosieren der Menge des in die Cremakammer injizierten Gases. Die Dosiervorrichtung ermöglicht eine Kontrolle der jeweiligen Injektion des Gases und insbesondere eine Kontrolle der Menge des jeweils injizierten Gases und ermöglicht die Erzeugung einer vorbestimmten Menge und Art von Crema auf dem Kaffeegetränk.

In einer Ausführungsform umfasst die Dosiervorrichtung eine Vorrichtung zum Aktivieren und/oder Deaktivieren einer Pumpe für das Gas und/oder ein regulierbares Ventil und/oder ein regulierbares Drosselorgan zum Regulieren einer Injektion des Gases. Mit der Vorrichtung zum Aktivieren sowie Deaktivieren der Pumpe oder dem regulierbaren Ventil kann der Zeitpunkt sowie die Menge des in die Cremakammer injizierten Gases bestimmt werden.

In einer Ausführungsform ist das Gas mit einem kleinen Überdruck injizierbar. Der Kaffee wird in der Brühkammer unter einem Druck gebrüht und fliesst danach durch eine Öffnung im Cremaventil in die Cremakammer. Um zu verhindern, dass der aus der Brühkammer ausfliessende Kaffee in die Injektionsvorrichtung fliesst, muss das Gas mit einem mindestens gleich hohen Druck aus der Injektionsvorrichtung in die Cremakammer injiziert werden. Wegen der Druckentspannung beim Fluss des Kaffees von der Brühkammer in die Cremakammer kommt es ausserdem zu einer optimalen Verwirbelung des Kaffees und zu einer gleichmässigen Durchmischung des Kaffees mit dem Gas, wodurch ein sehr feinporiger Schaum entsteht.

In einer weiteren Ausgestaltung ist die Menge des in die Cremakammer injizierten Gases programmierbar oder einstellbar und/oder innerhalb vorgegebener Grenzen auswählbar. Durch die Programmierung oder Einstellung kann die Menge und die Art der Crema durch den Hersteller der Kaffeemaschine oder eine Fachperson für einzelne Kaffeegetränke vorgegeben werden. Somit kann, abhängig von regionalen oder kulturellen Vorlieben, eine bestimmte Menge und/oder Porengrösse der Crema voreingestellt werden. Der Benutzer der Brühvorrichtung kann abhängig vom persönlichen Geschmack die Menge und Porengrösse der Crema auswählen.

In einer weiteren Ausgestaltung injiziert die Injektionsvorrichtung das Gas mit einer Düse in die Cremakammer, wobei die Düse in einem Winkel zwischen 10° und 170° bezüglich der Flussrichtung des Kaffees in der Cremakammer und vorzugsweise in einem Winkel zwischen 10° und 90° entgegen der Flussrichtung des Kaffees in der Cremakammer angeordnet ist. Die Düse ist dabei an einer Eintrittsöffnung des gebrühten Kaffees in die Cremakammer angeordnet. Durch diese Anordnung der Düse wird das Gas direkt in den verwirbelnden Kaffee injiziert. Dadurch findet eine optimale Durchmischung des Kaffees mit dem Gas statt.

Das erfindungsgemässe Verfahren dient zur Herstellung eines Kaffeegetränks mit einer Brühvorrichtung für Kaffee, wobei die Brühvorrichtung mindestens eine Brüheinheit zum Brühen von Kaffee, ein Cremaventil und einen Kaffeeauslass umfasst und gebrühter Kaffee von der Brüheinheit durch das Cremaventil zum Kaffeeauslass fliesst. Das Cremaventil ist dabei derart ausgebildet, dass der gebrühte Kaffee in einer Cremakammer des Cremaventils durchwirbelt wird, so dass eine Crema erzeugt wird. Zusätzlich wird Gas in die Cremakammer injiziert, wobei die Menge des in die Cremakammer injizierten Gases dosiert wird.

Durch das Dosieren der Menge des injizierten Gases wird die Menge und die Art der Crema, welche in der Cremakammer bei der Durchwirbelung des aus der Brüheinheit ausfliessenden Kaffees erzeugt wird, vorbestimmt und - abhängig von der jeweiligen Menge des Gases - verändert.

In einer Ausführungsform wird ein Zeitpunkt, an welchem die jeweilige Gas-Injektion beginnt, und/oder eine Dauer der jeweiligen Gas-Injektion und/oder ein Druck des injizierten Gases verändert. Durch die Vorgabe der Menge und des Drucks des injizierten Gases, als Funktion der Zeit, wird ein Profil definiert, welches einer (hinsichtlich Menge und Art) vorbestimmten Crema zugeordnet ist.

Das Verändern der verschiedenen Parameter, beispielsweise der Menge und/oder des Drucks des in die Cremakammer injizierten Gases, verändert die Menge und Porengrösse der erzeugten Crema. So hat insbesondere der Zeitpunkt oder die Dauer der Gas-Injektion während des Ausflusses des Kaffees aus der Brühkammer einen Einfluss auf die Menge der Crema. Durch Einstellen der jeweiligen Parameter als Funktion der Zeit können verschiedene Profile vorgegeben werden, welche - abhängig vom gewählten Kaffeegetränk, von regionalen Gepflogenheiten und/oder persönlichem Geschmack - verschiedenen Crema-Mengen und unterschiedlichen Porengrössen zugeordnet werden können. In einem Speicher (z.B. in einem elektronischen Speicher und insbesondere in einem Speicher einer Steuereinheit der jeweiligen Brühvorrichtung) können verschiedene Profile abgelegt werden.

In einer bevorzugten Ausführungsform wird durch Injizieren von Gas in die Cremakammer ein Überdruck in der Cremakammer erzeugt und Restwasser aus der Cremakammer und/oder einer Flüssigkeitsleitung zwischen der Brüheinheit und dem Kaffeeauslass im Anschluss an einen Kaffeebezug oder einen Reinigungsvorgang zum Kaffeeauslass transportiert.

Mit dem Erzeugen eines Überdrucks in der Cremakammer wird das Restwasser, welches sich in der Cremakammer beziehungsweise in der Flüssigkeitsleitung befindet, zum Kaffeeauslass geführt. Durch das Entfernen des Restwassers wird das Cremaventil, die Flüssigkeitsleitung und der Kaffeeauslass gereinigt. Kaffeerückstände werden aus der Brühvorrichtung entfernt und die Bildung von Kalk durch stehendes Restwasser wird vermindert. Gleichzeitig wird das Auskühlen des Restwassers verhindert, welches beim nächsten Kaffeebezug ausgeschwemmt wird und die Qualität dieses Kaffeegetränks beeinträchtigt. Weiter wird ein ungewünschtes Nachlaufen und Abtropfen von Restwasser aus dem Kaffeeauslauf verhindert.

Weitere Einzelheiten der Erfindung und insbesondere beispielhafte Ausführungsformen der erfindungsgemässen Vorrichtung und des erfindungsgemässen Verfahrens werden im Folgenden anhand der beigefügten Zeichnungen erläutert. Es zeigen:
- Fig. 1: eine schematische Darstellung einer Brühvorrichtung mit einer Brüheinheit und einem Cremaventil;
- Fig. 2: eine Explosionsdarstellung der Brüheinheit gemäss Fig. 1 mit dem Cremaventil und einer Injektionsvorrichtung;
- Fig. 3: eine Seitenansicht der Brüheinheit gemäss Fig. 2 mit dem Cremaventil und der Injektionsvorrichtung;
- Fig. 4: Crema auf einem Kaffeegetränk in einer Seitenansicht;
- Fig. 5: wie Fig. 4, jedoch mit mehr und feinporigerer Crema.

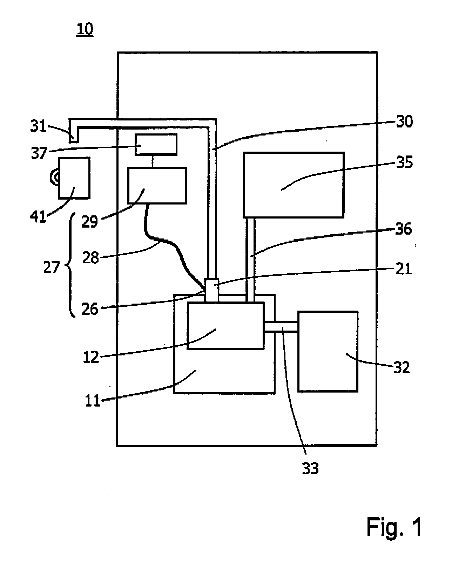

Figur 1 zeigt eine schematische Darstellung einer erfindungsgemässen Brühvorrichtung 10 für Kaffee. Die Brühvorrichtung 10 beinhaltet in der Darstellung einen Behälter 35, in welchem Rohkaffee in beliebiger Form, beispielsweise als Kaffeebohnen oder gemahlen, gelagert wird. Durch eine Kaffeezuleitung 36 wird der gemahlene Kaffee in eine Brühkammer 12 einer Brüheinheit 11 geleitet. In der Brühkammer 12 wird der Kaffee mit Wasser aus einem Wassertank 32, welcher durch eine Wasserzuleitung 33 ebenfalls mit der Brühkammer 12 verbunden ist, gebrüht. Am Ausfluss der Brüheinheit 11 befindet sich ein Cremaventil 21. Der gebrühte Kaffee fliesst durch das Cremaventil 21 und eine Flüssigkeitsleitung 30 zum Kaffeeauslass 31 in die Tasse 41. Das Cremaventil 21 ist derart ausgebildet, dass der gebrühte Kaffee in einer Cremakammer des Cremaventils 21 durchwirbelt und dabei eine Crema erzeugt wird.

Weiter befindet sich in der Brühvorrichtung 10 eine Injektionsvorrichtung 27 zum Injizieren eines Gases in das Cremaventil 21. Die Injektionsvorrichtung 27 umfasst eine Pumpe 29, einen Gasschlauch 28 sowie eine Düse, welche in die Cremakammer mündet. Durch den Gasschlauch 28 wird Gas von der Pumpe 29 zum Cremaventil 21 geführt. Das Gas wird am Cremaventil 21 durch die Düse in die Cremakammer injiziert und mit dem aus der Brüheinheit 11 ausfliessenden Kaffee vermischt. Durch eine Dosiervorrichtung 37, welche die Pumpe 29 nach Bedarf aktivieren und/oder deaktivieren kann, wird die Menge des in die Cremakammer injizierten Gases, welches in den gebrühten Kaffee injiziert wird, bestimmt.

Alternativ zu der Pumpe 29 kann auch ein Druckbehälter mit einem regulierbaren Ventil und/oder einem regulierbaren Drosselorgan verwendet werden. Dabei wird das regulierbare Ventil von der Dosiervorrichtung 27 nach Bedarf aktiviert und/oder deaktiviert (z.B. geöffnet oder geschlossen) bzw. das Drosselorgan von der Dosiervorrichtung 27 nach Bedarf geeignet verstellt. Es ist auch eine Kombination möglich, so kann beispielsweise eine Pumpe 29 zusammen mit einem Ventil bzw. einem Drosselorgan und/oder einem Druckbehälter eingesetzt werden.

In einer einfachen Ausgestaltung wird beispielsweise Umgebungsluft in einer Schlauchpumpe oder einer Kolbenpumpe unter einen Überdruck gesetzt und direkt in die Cremakammer injiziert. Die Pumpe 29 wird jeweils genau dann durch die Dosiervorrichtung 37 aktiviert, wenn das Gas in die Cremakammer injiziert werden soll. Beispielsweise durch Verändern einer der Pumpe 29 zugeführten elektrischen Leistung, kann der von der Pumpe 29 erzeugt Druck oder die Gasmenge verändert werden.

Es besteht auch die Möglichkeit, ein Kaffeegetränk zu beziehen, ohne dass zusätzlich Gas in die Cremakammer injizieren wird. Das heisst, es wird nur eine minimale Menge Crema durch das Cremaventil 21 erzeugt. In diesem Fall soll die Pumpe 29 nicht mit elektrischer Energie versorgt werden. Die Injektionsvorrichtung 27 sowie die Pumpe 29 muss dabei den in der Cremakammer vorhandenen Druck des aus der Brüheinheit 11 ausfliessenden Kaffees genügend abdichten, sodass ein Ausfliessen des Kaffees in die Injektionsvorrichtung 27 verhindert wird. Die Injektionsvorrichtung 27 ist dementsprechend so zu konstruieren, dass sie den in der Cremakammer herrschenden Druck ohne Energieaufnahme abzudichten vermag. Es kann zusätzlich auch ein regulierbares Ventil in der Nähe der Düse eingesetzt werden, welches den Rückfluss von Kaffee aus der Cremakammer in den Gasschlauch 28 verhindert. Alternativ kann der Gasschlauch 28 auch gequetscht oder verschlossen werden, um einen Fluss von Flüssigkeit durch den Gasschlauch zu verhindern.

Wie bereits erwähnt, kann anstelle der Pumpe 29 auch ein Druckbehälter eingesetzt werden, welcher beispielsweise an einem von der Brühvorrichtung 10 entfernten Ort aufgefüllt wird. Der Druckbehälter kann dabei mit einem Gas wie beispielsweise Kohlendioxid CO2, Sauerstoff 02 oder beispielsweise einem Aromastoff befüllt werden. Der Druckbehälter kann auch durch die Pumpe 29 befüllt werden und als Speicher für Druckluft dienen. Zur Dosierung der Gasinjektion wird ein regulierbares Ventil an der Druckflasche angeordnet oder in eine Verbindungsleitung für das Gas zwischen der Druckflasche und der Cremakammer integriert. Somit lässt sich die Menge des injizierten Gases und der Zeitpunkt des Beginns der Gasinjektion sowie die jeweilige Dauer der Gasinjektion nach Bedarf verändern.

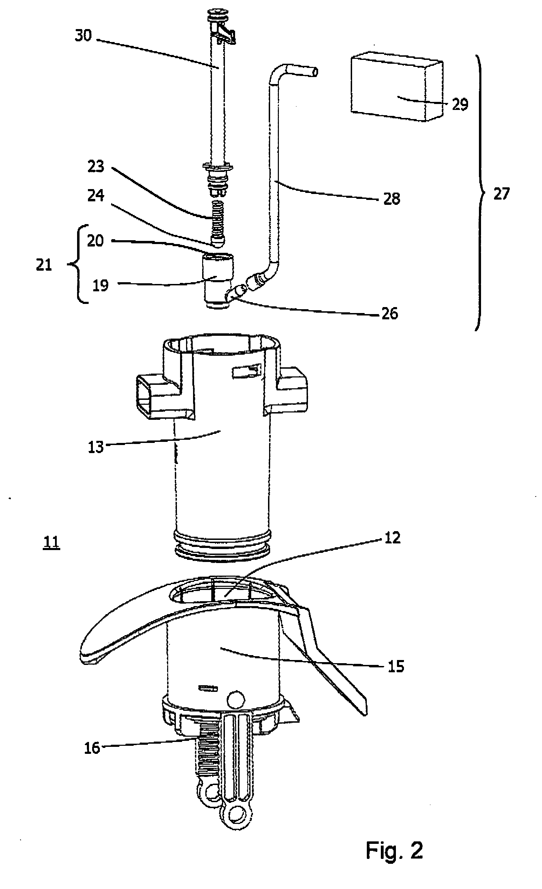

Figur 2 zeigt eine Explosionsdarstellung der Brüheinheit 11 mit Cremaventil 21 und der Injektionsvorrichtung 27. Das Cremaventil 21 wird durch den Gasschlauch 28 mit der Pumpe 29 verbunden. Der Gasschlauch 28 wird an der Düse 26 des Cremaventils 21 angeschlossen. Das Cremaventil 21 umfasst ein Ventilgehäuse 19, in dessen Innern eine Cremakammer 20 ausgebildet ist, wobei in die Cremakammer 20 ein Verschlusspfropfen 24 eingelassen ist. Der Verschlusspfropfen 24 wird durch eine Druckfeder 23, welche an einem Ende an einer Flüssigkeitsleitung 30 anliegt, nach unten gedrückt.

Das Cremaventil 21 ist in einen Brühkolben 13 integriert, welcher in einen Brühzylinder 15 eingeschoben wird. Durch das Ineinanderschieben von Brühkolben 13 und Brühzylinder 15 entsteht eine Brühkammer 12, in welcher der Kaffee gebrüht wird. Einem nach dem Brühvorgang zurückbleibenden Kaffeepulverrückstand wird im Anschluss an den Brühvorgang das Wasser entzogen, indem der Brühkolben 13 in den Brühzylinder 15 gedrückt wird. Der zurückbleibende Kaffeetrester wird dann durch einen Ausstosskolben 16 aus dem Brühzylinder 15 in einen Tresterbehälter ausgestossen. Danach ist die Brühvorrichtung für einen weiteren Kaffeebrühvorgang bereit.

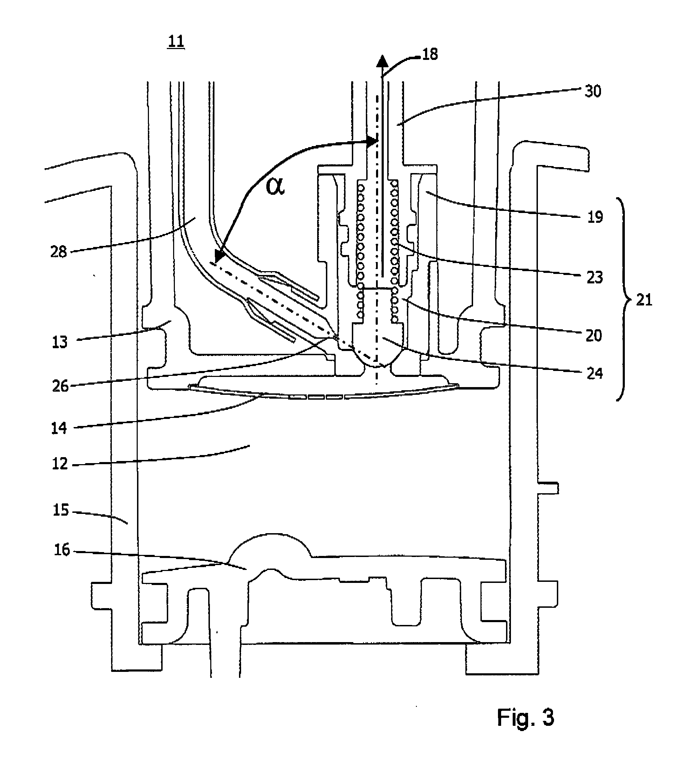

Figur 3 zeigt eine Seitenansicht der Brüheinheit 11 mit dem Cremaventil 21 und der Injektionsvorrichtung. Während des Brühvorgangs wird Kaffeepulver in der Brühkammer 12 mit heissem Wasser aufgebrüht. Das Wasser fliesst beispielsweise von der Unterseite der Brühkammer 12 ein. Bereits durch den Brühvorgang kann beispielsweise durch Vorbrühen, sowie Brühtemperatur und Brühdruck, die Bildung der Crema beeinflusst werden. Das gebrühte Kaffeewasser fliesst durch ein Metallsieb 14, welches am Brühkolben 13 befestigt ist, zum Cremaventil 21. Das Metallsieb 14 verhindert den Ausfluss von Kaffeepulver aus der Brühkammer 12.

Der Brühvorgang findet unter Druck statt. Die Druckfeder 23 im Cremaventil 21 muss entsprechend dimensioniert werden, sodass der Verschlusspfropfen 24 erst bei entsprechendem Druck den gebrühten Kaffee aus der Brühkammer 12 in die Cremakammer 20 des Cremaventils 21 ausfliesen lässt. Durch die Form des Verschlusspfropfens 24 und den hohen Druck, mit welchem der Kaffee aus der Brühkammer 12 ausfliesst, entstehen entlang der Oberfläche des Verschlusspfropfens 24 und des Cremaventils 21 Wirbel. Durch die Entspannung und die Verwirbelung entsteht die Crema im Kaffee. Anschliessend fliesst der Kaffee durch die Flüssigkeitsleitung 30 zum Kaffeeauslass 31.

Am Cremaventil 21 ist die Injektionsvorrichtung 27 befestigt. Mittels der Injektionsvorrichtung 27 kann das Gas durch eine Düse 26 in die Cremakammer 20 injiziert werden. Die Düse 26 hat vorzugsweise einen Durchmesser von ca. 0,5mm. Das Gas wird dabei in den aus der Brühkammer 12 ausfliessenden Kaffee injiziert. Es hat sich dabei als zweckmässig erwiesen, wenn die Düse 26 an dem Cremaventil 21 nahe am Verschlusspfropfen 24 in einem Winkel α zwischen 10° und 170° bezüglich der Flussrichtung 18 des aus der Brühkammer 12 fliessenden Kaffees angeordnet ist (die Flussrichtung ist in Fig. 3 durch einen mit dem Bezugszeichen 18 versehenen Pfeil gekennzeichnet). Weiterhin hat es sich als besonders vorteilhaft erwiesen, wenn die Düse 26 in einem Winkel α zwischen 10° und 90° entgegen der Flussrichtung 18 des aus der Brühkammer 12 fliessenden Kaffees angeordnet ist. Dadurch wird die Vermischung des Gases und des Kaffees optimiert, wodurch eine grosse Menge an kleinen Bläschen entstehen. Diese kleinen Bläschen bilden den feinporigen Schaum, die Crema.

Abhängig von verschiedenen Parametern wie zum Beispiel der in die Cremakammer 20 injizierten Menge an Gas, dem Druck des injizierten Gases und dem Zeitpunkt an welchem die Gas-injektion beginnt, entsteht eine andere Art und Menge von Crema.

Durch eine Spezifikation der Parameter Gasmenge und Gasdruck als Funktion der Zeit wird ein Profil definiert. Das Profil ist einer in der Art und Menge vorbestimmten Crema zugeordnet. In einem (in den Figuren nicht dargestellten) Speicher können verschiedene Profile abgelegt werden. Ein derartiger Speicher kann beispielweise ein elektronischer Speicher sein, wobei es zweckmässig ist, den Speicher der jeweiligen Steuereinheit zur Steuerung der Brühvorrichtung 10 zuzuordnen, damit die gespeicherten Profile für die Steuereinheit zugänglich sind. Durch verschiedene Profile kann zu einem bestimmten Kaffeegetränk eine den regionalen Gepflogenheiten entsprechende Crema erzeugt werden. Die Parameter eines Profils können beispielsweise durch den Hersteller oder einen Betreiber der Brühvorrichtung 10 vorgegeben werden. Weiter können zusätzlich für den Benutzer der Brühvorrichtung, abhängig von dessen persönlichen Geschmack, ein oder mehrere Profile ablegt oder von dem Benutzer bei einem Kaffeegetränkebezug eingestellt werden.

Um Störungen in der Brühvorrichtung 10 zu verhindern und ein Kaffeegetränk von hoher Qualität zu erzeugen, benötigt die Brühvorrichtung 10 eine gewisse Pflege. Durch ein Injizieren des Gases in das Cremaventil 21 nach dem Bezug des Kaffeegetränkes können das Cremaventil 21 sowie die Flüssigkeitsleitung 30 und der Kaffeeauslass 31 von Restwasser, welches nach dem Brühvorgang aufgrund konstruktiver Gegebenheiten zurückbleibt, entleert werden. Das Entfernen des Restwassers aus der Brühvorrichtung 10 durch das Injizieren des Gases in die Cremakammer 20 kann auch nach einem Reinigungsvorgang erfolgen. Es ist ebenfalls möglich, dass die Parameter Gasmenge und Gasdruck als Funktion der Zeit nach einem bestimmten Profil, abhängig von der Art der Reinigung, vorgegeben werden.

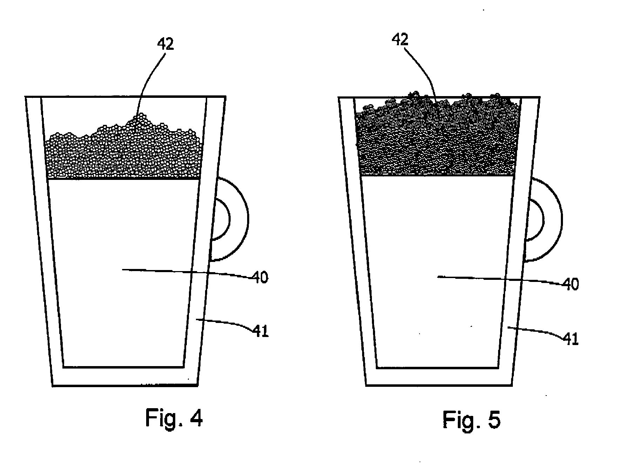

Die Figuren 4 und 5 zeigen je eine Tasse 41 mit einem Kaffeegetränk 40 mit verschiedener Crema 42. In Figur 4 wurde eine geringere Menge Crema 42 erzeugt. Die Höhe der Crema 42 auf dem Kaffeegetränk 40 und damit das gesamte Volumen der Crema 42 ist deshalb geringer als in Figur 5. Bei der Crema 42 in der Figur 5 wurden die Parameter zur Erzeugung der Crema 42 so vorgegeben, dass gegenüber Figur 4 eine feinporigerer Schaum und damit eine feinporigere Crema erzeugt wird. Die Crema 42 kann sich nebst der Menge und der Feinporigkeit auch in ihrem Aroma und in ihrer Färbung unterscheiden. Beispielsweise durch ein Zugeben von Aromastoffen kann der Duft oder Geschmack der Crema 42 beeinflusst werden. Durch die Zugabe beispielsweise von Milch oder verschiedener Rohkaffeesorten kann zusätzlich die Färbung der Crema 42 beeinflusst werden.

Das Kaffeegetränk 40 besteht meist im Wesentlichen aus mit Wasser gebrühtem Rohkaffee. Zusätzlich kann dem gebrühten Kaffee noch Milch, Zucker oder auch beispielsweise Schokoladenpulver oder flüssige Schokolade beigemischt werden. Es lassen sich so abhängig von kulturellen und regionalen Gepflogenheiten und dem persönliche Geschmack des Benutzers der Brühvorrichtung eine Vielzahl unterschiedlicher Kaffeegetränke herstellen und jeweils eine entsprechende, individuelle Crema 42 erzeugen.

## Patentansprüche

1. Brühvorrichtung (10) für Kaffee, mit
• einer Brüheinheit (11) zum Brühen von Kaffee,
• einem Cremaventil (21) und
• einem Kaffeeauslass (31),
wobei die Brüheinheit (11), das Cremaventil (21) und der Kaffeeauslass (31) derart miteinander verbunden sind, dass in der Brüheinheit (11) gebrühter Kaffee durch das Cremaventil (21) zum Kaffeeauslass (31) führbar ist
und das Cremaventil (21) derart ausgebildet ist, dass der gebrühte Kaffee in einer Cremakammer (20) des Cremaventils (21) durchwirbelbar ist, sodass eine Crema (42) erzeugt wird,
**gekennzeichnet, durch**
eine Injektionsvorrichtung (27) zum Injizieren eines Gases in die Cremakammer (20).

2. Brühvorrichtung nach Anspruch 1, **dadurch gekennzeichnet, dass** die Injektionsvorrichtung (27) eine Schlauchpumpe (29), eine Kolbenpumpe (29), eine andere Pumpe oder eine Druckflasche umfasst.

3. Brühvorrichtung nach einem der Ansprüche 1 oder 2, **dadurch gekennzeichnet, dass** eine Dosiervorrichtung (37) zum Dosieren der Menge des in die Cremakammer (20) injizierten Gases vorhanden ist.

4. Brühvorrichtung nach Anspruch 3, **dadurch gekennzeichnet, dass** die Dosiervorrichtung (37) eine Vorrichtung zum Aktivieren und/oder Deaktivieren einer Pumpe (29) für das Gas und/oder ein regulierbares Ventil und/oder ein regulierbares Drosselorgan zum Regulieren einer Injektion des Gases umfasst.

5. Brühvorrichtung nach einem der Ansprüche 1 bis 4, **dadurch gekennzeichnet, dass** das injizierte Gas vorzugsweise Luft, CO2 oder ein Aromastoff ist.

6. Brühvorrichtung nach einem der Ansprüche 1 bis 5, **dadurch gekennzeichnet, dass** die Menge des in die Cremakammer (20) injizierten Gases programmierbar oder einstellbar ist.

7. Brühvorrichtung nach Anspruch 6, **dadurch gekennzeichnet, dass** die Menge des in die Cremakammer (20) injizierten Gases innerhalb vorgegebener Grenzen auswählbar ist.

8. Brühvorrichtung nach einem der Ansprüche 1 bis 7, **dadurch gekennzeichnet, dass** die Injektionsvorrichtung (27) das Gas mit einer Düse (26) in die Cremakammer (20) injiziert, wobei die Düse (26) in einem Winkel (α) zwischen 10° und 170° bezüglich der Flussrichtung (18) des Kaffees in der Cremakammer (20), vorzugsweise in einem (α) zwischen 10° und 90° entgegen der Flussrichtung (18) des Kaffees, angeordnet ist.

9. Brühvorrichtung nach Anspruch 8, **dadurch gekennzeichnet, dass** die Düse (26) an einer Eintrittsöffnung für den gebrühten Kaffees in die Cremakammer (20) mündet.

10. Verfahren zum Erzeugen eines Kaffeegetränks, mit einer Brühvorrichtung (10) für Kaffee, wobei die Brühvorrichtung (10) mindestens
• eine Brüheinheit (11) zum Brühen von Kaffee,
• ein Cremaventil (21) und
• einen Kaffeeauslass (31)
umfasst, wobei gebrühter Kaffee von der Brüheinheit (11) durch das Cremaventil (21) zum Kaffeeauslass (31) fliesst
und das Cremaventil (21) derart ausgebildet ist, dass der gebrühte Kaffee in einer Cremakammer (20) des Cremaventils (21) durchwirbelt wird, so dass eine Crema (42) erzeugt wird,
**dadurch gekennzeichnet, dass**
Gas in die Cremakammer (20) injiziert wird.

11. Verfahren nach Anspruch 10, **dadurch gekennzeichnet, dass** die Menge des in die Cremakammer (20) injizierten Gases dosiert wird.

12. Verfahren nach einem der Ansprüche 10 oder 11, **dadurch gekennzeichnet, dass** ein Zeitpunkt, zu welchem die jeweilige Gas-Injektion beginnt, und/oder eine Dauer der Gas-Injektion und/oder ein Druck des injizierten Gases verändert wird.

13. Verfahren nach Anspruch 12, **dadurch gekennzeichnet, dass** durch die Vorgabe der Menge und des Drucks des injizierten Gases als Funktion der Zeit ein gespeichertes Profil vorgegeben wird, welches einer Crema (42) mit vorbestimmten Eigenschaften zugeordnet ist.

14. Verfahren nach einem der Ansprüche 10 bis 13, **dadurch gekennzeichnet, dass** das Gas mit einer Düse (26) in einem Winkel (α) zwischen 10° und 170° bezüglich der Flussrichtung (18) des Kaffees beim Eintritt des gebrühten Kaffees in die Cremakammer (20), bevorzugt in einem Winkel (α) zwischen 10° und 90° entgegen der Flussrichtung (18) des Kaffees, injiziert wird.

15. Verfahren nach einem der Ansprüche 10 bis 14, **dadurch gekennzeichnet, dass** die Menge des in die Cremakammer (20) injizierten Gases programmiert oder eingestellt und/oder innerhalb vorgegebener Grenze ausgewählt wird.

16. Verfahren nach einem der Ansprüche 10 bis 15, **dadurch gekennzeichnet, dass** Restwasser aus der Cremakammer (20) und/oder einer Flüssigkeitsleitung (24) zwischen der Brüheinheit (11) und dem Kaffeeauslass (31) im Anschluss an einen Kaffeebezug oder einen Reinigungsvorgang durch das Injizieren von Gas zum Kaffeeauslass (31) transportiert wird.

17. Verfahren nach einem der Ansprüche 10 bis 16, **dadurch gekennzeichnet, dass** im Anschluss an einen Kaffeebezug oder einen Reinigungsvorgang durch Injizieren von Gas in die Cremakammer (20) ein Überdruck in der Cremakammer (20) erzeugt wird.
